# EUROPÄISCHE PATENTSCHRIFT

(11) **EP 1 884 217 B1**
(45) Veröffentlichungstag und Bekanntmachung des Hinweises auf die Patenterteilung: **21.03.2018**
(21) Anmeldenummer: 07008162.5
(22) Anmeldetag: 21.04.2007
(51) Int. Cl.: A61C 19/00

(54) **Handgeführtes Lichthärtgerät**
Manually operated light hardening apparatus
Appareil manuel de durcissement à la lumière

(30) Priorität: 31.07.2006 DE 102006035658
(43) Veröffentlichungstag der Anmeldung: 06.02.2008
(73) Patentinhaber: Ivoclar Vivadent AG, 9494 Schaan (LI)
(72) Erfinder: Plank, Wolfgang, 6830 Rankweil (AT); Senn, Bruno, 9407 Buchs (CH)
(74) Vertreter: Baronetzky, Klaus

(56) Entgegenhaltungen:
- WO-A1-98/44861
- US-A1- 2002 177 099
- US-B1- 6 325 791
- US-B1- 6 602 074

## Beschreibung

Die Erfindung betrifft ein handgeführtes Lichthärtgerät, gemäß dem Oberbegriff von Anspruch 1.

Anliegend aus der DE-GM 82 19 588 ist ein Lichthärtgerät bekannt, das einen Annäherungsschalter aufweist. Der Annäherungsschalter besteht aus einer Infrarot-Lichtquelle und einem Infrarot-Detektor. Wenn ein Zahnersatzteil in den Beaufschlagungsbereich der Polymeristations-Lichtquelle, die als Halogenlampe ausgebildet ist, eingebracht wird, schaltet der Infrarot-Detektor über einen nicht dargestellten Schalter die Halogenlampe ein, so dass die Beaufschlagung mit Licht beginnt.

Diese Lösung hat zwar den Vorteil, dass keine besondere Maßnahme für die Einschaltung des Lichthärtgeräts ergriffen werden muss. Das dortige Lichthärtgerät wird jedoch zwangsweise eingeschaltet, wenn ein beliebiger Gegenstand in den Bereich der Lichtquelle gerät. Beispielsweise auch dann, wenn ein Benutzer in den Beaufschlagungsbereich eingreift, auch beispielsweise zu Reinigungszwecken. Häufiges Ein- und Ausschalten ist der Lebensdauer von Halogen-Lichtquellen jedoch abträglich. Zudem ist die dort vorgestellte Lösung in gewissem Maße gefährlich. Wenn die dortige Schutzblende zu Reinigungszwecken abgenommen ist, kann es sein, dass durch das automatische Einschalten eine versehentliche Blendung durch den scharf gebündelten Strahl der Halogenlampe für den Benutzer entsteht, wenn die Halogenlampe versehentlich eingeschaltet wird.

Seit längerem ist es bekannt, Lichthärtgeräte programmgesteuert zu realisieren. Hierdurch muss die erforderliche Belichtungszeit nicht geschätzt werden, sondern kann programmgesteuert vorgegeben werden. Auch können bestimmte Emissionsprogramme, beispielsweise Farbwechsel oder intermittierende Emissionen, realisiert werden. Derartige Lösungen sind seit längerem bekannt, wobei als Beispiel für eine derartige Lösung das moderne Bluephase®-System der vorliegenden Anmelderin dienen mag. Durch hochenergetische spezielle Leuchtdioden mit einer Leuchtdichte von 1100 mW pro cm² oder sogar 1600 mW pro cm² lassen sich die erforderlichen Härtzeiten deutlich reduzieren, beispielsweise auf zehn oder sogar auf fünf Sekunden, je nach dem verwendeten Polymerisat.

Derartige programmgesteuerte Geräte benötigen in den allermeisten Fällen eine Initialisierung. Mit der Initialisieurng ist die Spannungsversorgung eingeschaltet, der Mikroprozessor, der die Programmsteuerung vornimmt, aktiviert und die Menüwahl für die erwünschten Programme bereitgestellt.

Für die Initialisierung wird der Betätigungsschalter für das Lichthärtgerät einmal kurz betätigt, wenn das Lichthärtgerät aus der Basisstation oder der Unterlage entnommen ist. Durch einmaligen Antippen des Betätigungsschalters wird die Initialisierung gestartet, und nach drei bis fünf Sekunden ist das Lichthärtgerät bereit für die Lichthärtung.

Wenn der Zahnarzt den Betätigungsschalter versehentlich nicht richtig trifft oder das Antippen versehentlich unterlässt, erfolgt keine Initialisierung. In diesem Falle würde der Betätigungsschalter beim beabsichtigten Start des Lichthärtzyklus erstmalig betätigt. Wenn der Zahnarzt dies bemerkt, verzögert sich der Härtezyklus unnötig, wenn er es hingegen nicht bemerkt, könnte die erwünschte Härtung - zumindest in dem beabsichtigten Ausmaß - unterbleiben.

Um eine Signalisierung zu gewährleisten, dass das Lichthärtgerät bereit ist, ist es vorgeschlagen worden, einen Signalton beim Beenden des Initialisierungsprozesses abzugeben. Ein derartiges zusätzliches akustisches Signal stört jedoch die erwünschte Ruhe im Umfeld der Zahnarztpraxis und beansprucht auch die Aufmerksamkeit des Zahnarztes, so dass eine derartige Lösung im Grunde unbefriedigend ist.

Die US 6602074 B1 offenbart ein Lichthärtsystem zum Härten von Dentalkompositen mit einer Basiseinheit und einer Härtpistole.

Die US 6352791 B1 offenbart ein Verfahren zur Verwendung eines schnurlosen medizinischen Lasers zum Härten von Kompositen.

Die US 2002/177099 A1 offenbart eine Leuchte zum Aktivieren von mittels Licht aktivierbaren Materialien mit einer Vielzahl von Einzelchips mit einem Spektrum.

Die WO 98/44861 offenbart eine Mehrzweckzahnbehandlungseinheit mit einer Vielzahl von elektrisch angetriebenen Zahnwerkzeugen mit Betriebsmitteln.

Demgegenüber liegt der Erfindung die Aufgabe zugrunde, ein Lichthärtgerät gemäß dem Oberbegriff des Anspruchs 1 zu schaffen, das grundsätzlich zum einen für die Programmsteuerung geeignet ist, sich jedoch besser in einen harmonischen Praxisbetrieb einfügt, ohne dass ein besonderer Aufwand für die Realisierung oder den Betrieb erforderlich wäre.

Diese Aufgabe wird erfindungsgemäß durch Anspruch 1 gelöst. Vorteilhafte Weiterbildungen ergeben sich aus den Unterarisprüchen.

Erfindungsgemäß ist es besonders günstig, dass ohne das Erforderniss eines zusätzlichen Benutzereingriffs das Lichthärtgerät aktiviert oder initialisiert wird, und zwar unmittelbar dann, wenn es von der Unterlage oder Basisstation abgehoben oder entfernt wird. Diese Automatik ermöglicht es dem Benutzer, seine Konzentration auf die für die optimale Härtung des Dentalrestaurationsteils wichtige Einstellung des Lichthärtgeräts zu richten, ohne dass Hilfsarbeiten wie die zusätzlich Betätigung eines Betätigungsschalters für die Aktivierung des Lichthärtgeräts erforderlich wären.

Hierzu ist erfindungsgemäß ein Sensor vorgesehen, der das Entfernen des Lichthärtgeräts von der Basisstation oder Unterlage, also praktisch der Docking-Station, erfasst und automatisch das Initialisierungsprogramm startet. Der Sensor kann beispielsweise als Näherungssensor ausgebildet sein, der feststellt, wenn die räumliche Nähe zwischen der Unterlage oder Basisstation einerseits und dem Lichthärtgerät andererseis nicht mehr besteht. Es ist aber auch möglich, einen einfachen Schalter an dem Lichthärtgerät oder der Unterlage anzubringen und über dessen Betätigung beim Entfernen des Lichthärtgeräts die erwünschte Initialisierung vorzunehmen.

Derartige Sensoren haben den Vorteil der Störungsunempfindlichkeit, so dass beim zwischenzeitlichen Ablegen des Lichthärtgeräts auf einem Behandlungstisch oder dergleichen nicht versehentlich eine erneute Initialisierung vorgenommen wird.

Erfindungsgemäß besonders günstig ist es, dass die Initialisierung gleichsam automatisch geschieht. Der Zahnarzt - oder gegebenenfalls der Zahntechniker - kann das Lichthärtgerät gar nicht aus seiner Ruheposition entnehmen, ohne dass es zur Initialsierung kommt. Eine Fehlbedienung durch falsche Betätigung des Betätigungsschalters oder durch Unterlassen der Betätigung ist nicht möglich, denn der Betätigungsschalter wird erst für den Start des eigentlichen Polymerisationszyklus erforderlich.

In diesem Zusammenhang ergibt sich aufgrund der Aufgabenteilung zwischen dem Entfernungssensor einerseits und dem Betätigungsschalter andererseits die Möglichkeit, den Betätigungssschalter bereits vorab - also beispielsweise nach bereits zwei Sekunden - aktiv zu schalten, und zwar für ein Standardprogramm. Auch wenn die Initialisierung beispielsweise vier Sekunden benötigt, kann so bereits vorab das Startsignal gegeben werden, wobei die eigentliche Lichthärtung mit dem Standardprogramm dann erst mit Abschluss des Initialisierungsprogramms beginnt.

Bevorzugt ist es jedenfalls, dass durch eine geeignete Signalisierung das Ende des Initialisierungsprogramms angezeigt wird, beispielsweise durch eine grüne Leuchtdiode oder ein "Bereit"-Feld auf dem Display oder der Anzeigevorrichtung des Lichthärtgeräts, und dass der Benutzer dann umgehend das erwünschte Polymerisationsprogramm über das eingeblendete Menü wählen kann.

Es versteht sich jedoch, dass anstelle dessen auch eine reine Zeitsteuerung möglich ist, dass also der Polymerisationszyklus lediglich durch Betätigen des Betätigungsschalters gestartet und beendet wird.

Erfindungsgemäß ist es besonders günstig, wenn der Sensor im Lichthärtgerät angebracht ist. Bei dieser Lösung ist es möglich, die Initialisierung umgehend vorzunehmen, wenn der Sensor anzeigt, dass das Lichthärtgerät von der Docking-Station entfernt wurde.

Wenn der Sensor an oder in der Docking-Station angebracht ist, muss bei Entfernung von der Docking-Station die Information über die Entfernung an das Lichthärtgerät übermittelt werden, was beispielsweise über eine Funkverbindung, eine Infrarotverbindung oder dergleichen erfolgen kann.

Gemäß einer weiteren, besonders günstigen Ausgestaltung ist es vorgesehen, die von der Docking-Station bereitgestellte Ladespannung für die Akkumulatoren des Lichthärtgeräts für die Erfassung, ob das Lichthärtgerät von der Docking-Station entfernt wurde, zu verwenden. Typischerweise wird die Ladespannung permanent von der Docking-Station bereitgestellt. Die Aufladung der Akkumulatoren erfolgt jedoch lediglich dann, wenn die Klemmenspannung der Akkumulatoren unterhalb eines vorgegebenen Werts ist.

Über einen Schalttransistor oder eine ähnliche hierfür geeignete Spannungserfassungsvorrichtung lässt sich nun erfassen, wenn die Ladespannung an dem entsprechenden Kontakt des Lichthärtgeräts nicht mehr anliegt, das Lichthärtgerät also entnommen wurde.

Es versteht sich, dass bei dieser Ausgestaltung dafür Sorge getragen werden muss, dass nicht eine vom Netz getrennte und ausgeschaltete Docking-Station versehentlich zur Initialisierung führt. Dies kann beispielsweise auch durch eine Widerstandsmessung erfolgen, die erfasst, wenn die Kontakte des Lichthärtgeräts keine Verbindung mit den entsprechenden Kontakten der Docking-Station haben.

Gemäß einer besonders vorteilhaften Ausgestaltung der Erfindung ist es vorgesehen, dass der Sensor an oder in dem Lichthärtgerät angebracht ist und beim Anheben des Lichthärtgeräts diesen initialisiert.

Gemäß einer weiteren vorteilhaften Ausgestaltung der Erfindung ist es vorgesehen, dass der Sensor an oder in der Basisstation oder der Unterlage angebracht ist und bei Entfernung des Lichthärtgeräts von der Basisstation oder Unterlage ein Signal, insbesondere ein Funksignal, an das Lichthärtgerät übermittelt.

Gemäß einer weiteren vorteilhaften Ausgestaltung der Erfindung ist es vorgesehen, dass der Sensor lösbar angebracht ist und bei Entfernung des Lichthärtgeräts von der Basisstation oder der Unterlage das Lichthärtgerät initialisiert.

Gemäß einer weiteren vorteilhaften Ausgestaltung der Erfindung ist es vorgesehen, dass der Sensor als Näherungssensor ausgebildet ist, der bei Entfernung des Lichthärtgeräts von der Basissttion oder der Unterlage auslöst.

Gemäß einer weiteren vorteilhaften Ausgestaltung der Erfindung ist es vorgesehen, dass der Sensor als Erschütterungssensor ausgebildet ist, der bei Entfernung des Lichthärtgeräts von der Bassistation oder der Unterlage auslöst.

Gemäß einer weiteren vorteilhaften Ausgestaltung der Erfindung ist es vorgesehen, dass der Sensor als Berührungssensor ausgebildet ist, der beim Berühren des Lichthärtgeräts, der Basisstation oder der Unterlage aktiviert wird.

Gemäß einer weiteren vorteilhaften Ausgestaltung der Erfindung ist es vorgesehen, dass der Sensor als Magnetischer Sensor ausgebildet ist, der bei Entfernung des Lichthärtgeräts von der Unterlage oder der Basisstation auslöst.

Gemäß einer weiteren vorteilhaften Ausgestaltung der Erfindung ist es vorgesehen, dass der Sensor als Annäherungssensor ausgebildet ist, da er bei Annäherung einer Hand des Benutzers an das Lichthärtgerät auslöst.

Gemäß einer weiteren vorteilhaften Ausgestaltung der Erfindung ist es vorgesehen, dass der Sensor als Schalter, insbesondere als Mikroschalter, ausgebildet ist, der beim Anheben oder Entfernen des Lichthärtgeräts von der Basisstation oder Unterlage schaltet und das Lichthärtgerät initialisiert.

Gemäß einer weiteren vorteilhaften Ausgestaltung der Erfindung ist es vorgesehen, dass die Initialisierung des Lichthärtgeräts ein Initialisierungsprogramm einleitet, über welches das Lichthärtgerät für das Einschalten der Lichtquelle vorbereitet wird.

Gemäß einer weiteren vorteilhaften Ausgestaltung der Erfindung ist es vorgesehen, dass ein Initialisierungsprogramm des Lichthärtgeräts zwischen 0,1 sek und 8 sek, insbesondere zwischen 0,3 sek und 5 sek und bevorzugt etwa 0,5 sek bis 1 sek dauert.

Gemäß einer weiteren vorteilhaften Ausgestaltung der Erfindung ist es vorgesehen, dass das Lichthärtgerät einen Betätigungsschalter aufweist, der mechanisch oder elektrisch gesperrt ist, bevor das Initialisierungsprogramm abgelaufen ist.

Gemäß einer weiteren vorteilhaften Ausgestaltung der Erfindung ist es vorgesehen, dass der Sensor als Spannungserfassungsvorrichtung ausgebildet ist, die beim Wegfall der an dem Lichthärtgerät anliegenden und von der Basisstation bereitgestellten Ladespannung für die Akkumulatoren des Lichthärtgeräts das Initialisierungsprogramm startet.

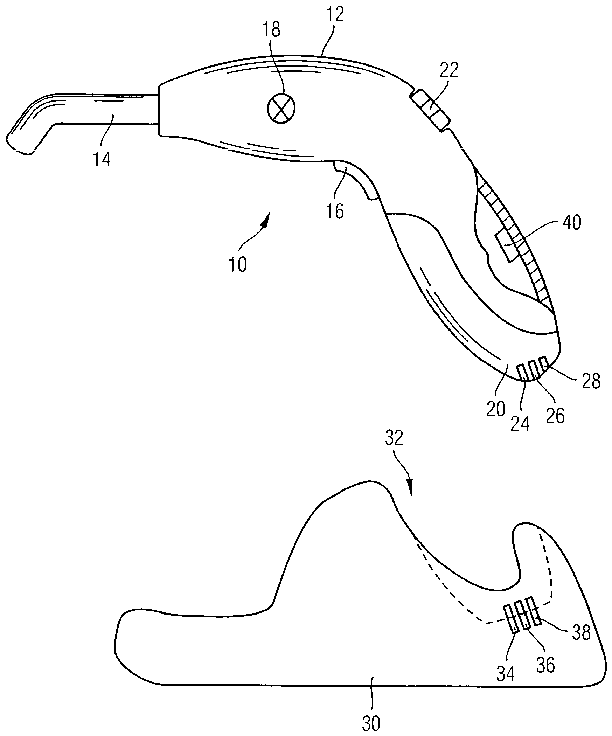

Weitere Vorteile, Einzelheiten und Merkmale ergeben sich aus der nachfolgenden Beschreibung eines Ausführungsbeispiels der Erfindung anhand der Zeichnung.

Es zeigen:
Die einzige Zeichnung eine schematische Ansicht eines Lichthärtgeräts in Verbindung mit einer Basisstation.

Aus der Figur ist ein Lichthärtgerät 10 ersichtlich, das im Wesentlichen pistolenförmig aufgebaut ist. Das Lichthärtgerät 10 weist ein Gehäuse 12 auf, das an seinem vorderen Ende einen Lichtleiter 14 trägt. Über einen Betätigungsschalter 16 ist eine in dem Lichthärtgerät angeordnete und schematisch angedeutete Lichtquelle 18 einschaltbar.

Das Lichthärtgerät 10 weist ferner einen Akkumulator 20 auf, der im Handgriff des pistolenförmigen Gehäuses 12 angeordnet ist. Gut sichtbar an der Oberseite des Gehäuses ist ferner eine Anzeigevorrichtung 22 vorgesehen, die den Betriebszustand des Lichthärtgeräts 10 anzeigt und gegebenenfalls auch Betätigungselemente wie einen Touchscreen oder dergleichen aufweisen kann, um die Bedienung im Einzelnen zu vereinfachen.

Das Gehäuse 12 weist an dem unteren/hinteren Ende des Griffs ferner eine Mehrzahl von Kontakten 24, 26 und 28 auf. Über die Kontakte 24 bis 28, die auch mehrpolig als dreipolig ausgebildet sein können, ist der Akkumulator 20 aufladbar. Hierzu ist eine Basisstation 30 vorgesehen, die auch als Docking-Station bezeichnet werden kann, und eine Stützöffnung 32 aufweist. In die Stützöffnung 32 ist das Gehäuse 12 mit dem Handgriff einführbar. Am unteren Ende der Stützöffnung 32 sind zu den Kontakten 24 bis 28 passende Kontakte 34, 36 und 38 ausgebildet, die der Spannungsversorgung des Lichthärtgeräts 12 dienen. Zusätzlich können bei Bedarf auch Daten über die Kontakte 24 bis 28 sowie 34 bis 38 übermittelt werden.

Erfindungsgemäß weist das Lichthärtgerät 10 ferner einen Sensor 40 auf. Der Sensor 40 erfasst, wenn das Lichthärtgerät aus der Stützöffnung 32 herausgenommen wird und damit das Lichthärtgerät von der Basisstation 30 entfernt wird.

Der Sensor schaltet umgehend ein Initialisierungsprogramm für das Lichthärtgerät ein, das den in dem Lichthärtgerät 10 vorgesehenen Mikroprozessor mit Spannung aus dem Akkumulator 20 versorgt, und diesen die Initialisierung vornehmen lässt. Das Initialisierungsprogramm dauert im Beispielsfall drei Sekunden, und über die Anzeigevorrichtung 22 wird signalisiert, wenn das Lichthärtgerät 10 für die Lichthärtung bereit ist.

Sobald die Bereitschaft gegeben ist, ist der Betätigungsschalter 16 betätigbar, während die Betätigung des Betätigungsschalters 16 vor der Bereitschaft zu keinem Lichthärtvorgang führt.

In dem dargestellten Ausführungsbeispiel ist der Sensor 40 ein Näherungssensor. Beispielsweise kann die für RFID-Chips verwendete Technik eingesetzt werden, indem ein entsprechender RFID-Scanner als Sensor eingesetzt wird, und ein RFID-Tag oder -Chip in der Basisstation 30 oder an dieser befestigt ist.

Es versteht sich, dass anstelle dessen auch eine beliebige andere Ausgestaltung des Sensors möglich ist. Beispielsweise kann einer der Kontakte 24, 26 oder 28 als Erfassungskontakt realisiert sein, der überprüft, ob eine Verbindung zu dem entsprechenden Kontakt 34, 36 oder 38 besteht. Ferner kann der Sensor 40 auch als Mikroschalter ausgebildet sein, der sich beispielsweise öffnet, wenn das Lichthärtgerät 10 von der Basisstation 30 entfernt wird.

Auch wenn hier die Basisstation 30 als Aufnahme für das Lichthärtgerät dargestellt ist, versteht es sich, dass anstelle dessen auch ein beliebiger anderer Ständer als Basisstation oder Unterlage eingesetzt werden kann. Beispielsweise ist es möglich, dass der Zahnarzt in der Nähe des Behandlungsorts einen Ständer vorgesehen hat, in den das Lichthärtgerät bei Nichtgebrauch eingesetzt wird.

Ein derartiger Ständer oder eine derartige Unterlage hat typischerweise keine Ladefunktion für den Akkumulator 20. Dennoch ist auch hier die Aktivierung des Sensors 40 bei Entfernen möglich, vorausgesetzt, der Sensor 40 ist so ausgebildet, dass er beim Entfernen von dem Ständer oder der Unterlage aktiviert wird.

Nach der Lichthärtung wird das Lichthärtgerät 10 nach einer gewissen Wartezeit typischerweise wieder in den Ruhezustand versetzt. In diesem Ruhezustand ist die Elektronik des Lichthärtgeräts stromlos, wobei lediglich der Sensor 40 überwacht wird.

Wenn der Sensor 40 als Mikroschalter-Schließkontakt ausgebildet ist, ist es auch möglich, auch insofern in dem Ruhezustand eine Stromfreiheit sicherzustellen, denn in abgestelltem Zustand ist das Lichthärtgerät 10 dann aufgrund des geöffneten Mikroschalters völlig stromlos. Lediglich bei Entfernung von der Unterlage wird der Mikroschalter dann geschlossen und stellt sicher, dass die Initialisierung beginnt.

Es versteht sich, dass der Sensor 40 entweder elektronisch oder mechanisch prellfrei ausgestaltet sein muss. Dies verhindert, dass aufgrund von Kontaktprellen oder dergleichen Störungen des Initialisierungsprogramms auftreten.

Alternativ ist es auch möglich, den Sensor 40 in der Basisstation 30 vorzusehen. Bei dieser Lösung ist erforderlich, dem Lichthärtgerät 10 den Schaltzustand des Sensors 40 über geeignete Mittel, wie beispielsweise eine Funkverbindung, zu übermitteln.

## Patentansprüche

1. Handgeführtes Lichthärtgerät (10), insbesondere für den Dentalbereich, mit einer Basisstation (20) oder einer Unterlage, an oder auf welcher das eine Lichtquelle (18) aufweisende Lichthärtgerät (10) abgestützt ist, wobei ein Sensor (40) an der Basisstation (30) und/oder Unterlage und/oder an dem Lichthärtgerät (10) angebracht ist, wobei der Sensor (40) das Lichthärtgerät (10) initialisiert, wobei das Lichthärtgerät (10) einen Betätigungsschalter (16) aufweist und, wobei die Initialisierung des Lichthärtgeräts (10) ein Initialisierungsprogramm einleitet, über welches das Lichthärtgerät (10) für das Einschalten der Lichtquelle (18) vorbereitet wird, **dadurch gekennzeichnet, dass** der Betätigungsschalter (16) an dem Lichthärtgerät (10) angebracht ist, und, dass der Betätigungsschalter (16) mechanisch oder elektrisch gesperrt ist, bevor das Initialisierungsprogramm abgelaufen ist.

2. Lichthärtgerät nach Anspruch 1, **dadurch gekennzeichnet, dass** der Sensor (40) an oder in dem Lichthärtgerät (10) angebracht ist und beim Anheben des Lichthärtgeräts (10) diesen initialisiert.

3. Lichthärtgerät nach Anspruch 1, **dadurch gekennzeichnet, dass** der Sensor (40) an oder in der Basisstation (30) oder der Unterlage angebracht ist und bei Entfernung des Lichthärtgeräts (10) von der Basisstation (30) oder Unterlage ein Signal, insbesondere ein Funksignal, an das Lichthärtgerät (10) übermittelt.

4. Lichthärtgerät nach einem der vorhergehenden Ansprüche, **dadurch gekennzeichnet, dass** der Sensor (40) lösbar angebracht ist und bei Entfernung des Lichthärtgeräts (10) von der Basisstation (30) oder der Unterlage das Lichthärtgerät (10) initialisiert.

5. Lichthärtgerät nach einem der vorhergehenden Ansprüche, **dadurch gekennzeichnet, dass** der Sensor (40) als Näherungssensor ausgebildet ist, der bei Entfernung des Lichthärtgeräts (10) von der Basisstation (30) oder der Unterlage auslöst.

6. Lichthärtgerät nach einem der vorhergehenden Ansprüche, **dadurch gekennzeichnet, dass** der Sensor (40) als Erschütterungssensor ausgebildet ist, der bei Entfernung des Lichthärtgeräts (10) von der Basisstation (30) oder der Unterlage auslöst.

7. Lichthärtgerät nach einem der vorhergehenden Ansprüche, **dadurch gekennzeichnet, dass** der Sensor (40) als Berührungssensor ausgebildet ist, der beim Berühren des Lichthärtgeräts (10), der Basisstation (30) oder der Unterlage aktiviert wird.

8. Lichthärtgerät nach einem der vorhergehnenden Ansprüche, **dadurch gekennzeichnet, dass** der Sensor (40) als magnetischer Sensor ausgebildet ist, der bei Entfernung des Lichthärtgeräts (10) von der Unterlage oder der Basisstation (30) auslöst.

9. Lichthärtgerät nach einem der vorhergehenden Ansprüche, **dadurch gekennzeichnet, dass** der Sensor (40) als Annäherungssensor ausgebildet ist, da er bei Annäherung einer Hand des Benutzers an das Lichthärtgerät auslöst.

10. Lichthärtgerät nach einem der vorhergehenden Ansprüche, **dadurch gekennzeichnet, dass** der Sensor (40) als Schalter, insbesondere als Mikroschalter, ausgebildet ist, der beim Anheben oder Entfernen des Lichthärtgeräts (10) von der Basisstation (30) oder Unterlage schaltet und das Lichthärtgerät (10) initialisiert.

11. Lichthärtgerät nach einem der vorhergehenden Ansprüche, **dadurch gekennzeichnet, dass** ein Initialisierungsprogramm des Lichthärtgeräts (10) zwischen 0,1 sek und 8 sek, insbesondere zwischen 0,3 sek und 5 sek und bevorzugt etwa 0,5 sek bis 1 sek dauert.

12. Lichthärtgerät nach einem der vorhergehenden Ansprüche, **dadurch gekennzeichnet, dass** der Sensor (40) als Spannungserfassungsvorrichtung ausgebildet ist, die beim Wegfall der an dem Lichthärtgerät (10) anliegenden und von der Basisstation (30) bereitgestellten Ladespannung für die Akkumulatoren des Licht-härtgeräts (10) das Initialisierungsprogramm startet.

## Claims

1. A hand-held light curing device (10), especially for dentistry, having a base station (20) or a base, which the light curing device (10) comprising a light source (18) is supported at or on, respectively, wherein a sensor (40) is attached to the base station (30) and/or the base and/or at the light curing device (10), wherein the sensor (40) initializes the light curing device (10), wherein the light curing device (10) comprises an actuating switch (16) and, wherein Initialization of the light curing device (10) induces an initializing routine through which the light curing device (10) will be prepared for turning on the light source (18), **characterized in that** the actuating switch (16) is attached to the light curing device (10), and **in that** the actuating switch (16) is mechanically or electrically locked before the initializing routine is completed.

2. The light curing device according to 1, **characterized in that** the sensor (40) is attached on or in the light curing device (10) and initializes said sensor upon lifting the light curing device (10).

3. The light curing device according to 1, **characterized in that** the sensor (40) is attached at or in the base station (30) or base, and upon removing the light curing devices (10) from the base station (30) or base, a signal, especially a radio signal, is transferred to said light curing device (10).

4. The light curing device according to one of the preceding claims, **characterized in that** the sensor (40) is releasably attached, and Initializes said light curing device (10) upon removing the light curing device (10) from the base station (30) or the base.

5. The light curing device according to one of the preceding claims, **characterized in that** the sensor (40) is formed as a proximity sensor, which becomes activated upon removing the light curing devices (10) from the base station (30) or the base.

6. The light curing device according to one of the preceding claims, **characterized in that** the sensor (40) is formed as an impact sensor, which becomes activated upon removing the light curing device (10) from the base station (30) or the base.

7. The light curing device according to one of the preceding claims, **characterized in that** the sensor (40) is formed as a touch sensor, which becomes activated upon removing the light curing device (10) from the base station (30) or the base.

8. The light curing device according to one of the preceding claims, **characterized in that** the sensor (40) is formed as a magnetic sensor, which becomes activated upon removing the light curing device (10) from the base station (30) or the base.

9. The light curing device according to one of the preceding claims, **characterized in that** the sensor (40) is formed as a proximity sensor, as it activates the light curing device upon approaching a user?s hand.

10. The light curing device according to one of the preceding claims, **characterized in that** the sensor (40) is formed as a switch, especially as a micro switch, which switches from the base station (30) or the base and initializes the light curing device (10) upon lifting or removing the light curing device (10).

11. The light curing device according to one of the preceding claims, **characterized in that** an initializing routine of the light curing device (10) is between 0.1 s and 8 s, especially between 0.3 s and 5 s and is preferably about 0.5 s to 1 s.

12. The light curing device according to one of the preceding claims, **characterized in that** the sensor (40) is formed as a voltage detection device, which starts the initializing routine upon disappearance of the charging voltage applied to the light curing device (10) and provided from the base station (30) to the accumulators of the light curing device (10).

## Revendications

1. Dispositif de photopolymérisation à guidage manuelle (10), en particulier pour le domaine dentaire, avec une station de base (30) ou un support sur laquelle le dispositif de photopolymérisation (10) présentant une source de lumière (18) est soutenu, où un capteur (40) est installé sur la station de base (30) et/ou le support et/ou sur le dispositif de photopolymérisation (10), où le capteur (40) initialise le dispositif de photopolymérisation (10), où le dispositif de photopolymérisation (10) présente un commutateur de commande (16) et où l'initialisation de le dispositif de photopolymérisation (10) déclenche un programme d'initialisation par le biais duquel le dispositif de photopolymérisation (10) est préparé pour mettre en marche la source de lumière (18), **caractérisé en ce que** le commutateur de commande (16) est installé sur le dispositif de photopolymérisation (10), et que le commutateur (16) est verrouillé mécaniquement ou électriquement, avant que le programme d'initialisation soit terminé.

2. Dispositif de photopolymérisation selon la revendication 1, **caractérisé en ce que** le capteur (40) est installé sur ou dans le dispositif de photopolymérisation (10) et l'initialise lorsque l'unité de photopolymérisation (10) est levé.

3. Dispositif de photopolymérisation selon la revendication 1, **caractérisé en ce que** le capteur (40) est installé sur ou dans la station de base (30) ou le support et, lorsque le dispositif de photopolymérisation (10) est enlevé de la station de base (30) ou le support, transmet un signal, en particulier un signal radio, à le dispositif de photopolymérisation (10).

4. Dispositif de photopolymérisation selon l'une des revendications précédentes, **caractérisé en ce que** le capteur (40) est installé de manière amovible et initialise le dispositif de photopolymérisation (10) lorsque le dispositif de photopolymérisation (10) est enlevé de la station de base (30) ou du support.

5. Dispositif de photopolymérisation selon l'une des revendications précédentes, **caractérisé en ce que** le capteur (40) est configuré comme capteur de proximité, qui se déclenche lorsque le dispositif de photopolymérisation (10) est éloigné de la station de base (30) ou le support.

6. Dispositif de photopolymérisation selon l'une des revendications précédentes, **caractérisé en ce que** le capteur (40) est configuré comme capteur de vibration, qui se déclenche lorsque le dispositif de photopolymérisation (10) est éloigné de la station de base (30) ou le support.

7. Dispositif de photopolymérisation selon l'une des revendications précédentes, **caractérisé en ce que** le capteur (40) est configuré comme capteur de contact, qui est activé par le contact de le dispositif de photopolymérisation (10), la station de base (30) ou le support.

8. Dispositif de photopolymérisation selon l'une des revendications précédentes, **caractérisé en ce que** le capteur (40) est configuré comme capteur magnétique, qui se déclenche lorsque le dispositif de photopolymérisation (10) est éloigné de la station de base (30) ou le support..

9. Dispositif de photopolymérisation selon l'une des revendications précédentes, **caractérisé en ce que** le capteur (40) est configuré comme capteur de proximité (40), puisqu'il se déclenche à l'approche d'une main de l'opérateur le dispositif de photopolymérisation.

10. Dispositif de photopolymérisation selon l'une des revendications précédentes, **caractérisé en ce que** le capteur (40) est configuré comme interrupteur, en particulier comme micro-interrupteur, qui commute lorsque le dispositif de photopolymérisation (10) est levé ou éloigné de la station de base (30) ou du support et initialise le dispositif de photopolymérisation (10).

11. Dispositif de photopolymérisation selon l'une des revendications précédentes, **caractérisé en ce qu'**un programme d'initialisation de le dispositif de photopolymérisation (10) dure entre 0,1 sec et 8 sec, en particulier entre 0,3 sec et 5 sec et de préférence environ 0,5 sec à 1 sec.

12. Dispositif de photopolymérisation selon l'une des revendications précédentes, **caractérisé en ce que** le capteur (40) est configuré comme dispositif de détection de tension et lors de la suspension de la tension de charge pour les accumulateurs de le dispositif de photopolymérisation (10) sur le dispositif de photopolymérisation (10) fourni par la station de base (30) le programme d'initialisation démarre.
